# EUROPÄISCHE PATENTSCHRIFT

(11) **EP 4 454 922 B1**
(45) Veröffentlichungstag und Bekanntmachung des Hinweises auf die Patenterteilung: **04.02.2026**
(21) Anmeldenummer: 24157281.7
(22) Anmeldetag: 13.02.2024
(51) Int. Cl.: A01D 43/08, B60K 15/063, B60K 15/073, B60K 15/067

(54) **FELDHÄCKSLER**
CHAFF CUTTER
RÉCOLTEUSE-HACHEUSE

(30) Priorität: 24.04.2023 DE 102023110339
(43) Veröffentlichungstag der Anmeldung: 30.10.2024
(73) Patentinhaber: CLAAS Selbstfahrende Erntemaschinen GmbH, 33428 Harsewinkel (DE)
(72) Erfinder: THIES, Sören, 33442 Herzebrock-Clarholz (DE)
(74) Vertreter: CLAAS Gruppe

(56) Entgegenhaltungen:
- EP-A1- 1 291 221
- CN-U- 217 574 852
- JP-A- 2022 097 213
- US-A1- 2014 360 148

## Beschreibung

Die vorliegende Erfindung betrifft einen Feldhäcksler gemäß dem Oberbegriff des Anspruches 1. Weiterhin ist ein Verfahren zur Montage und Demontage eines Bauteils an einem Feldhäcksler Gegenstand der vorliegenden Erfindung.

Aus der EP 3 549 805 B1 ist ein Kraftstofftank für eine landwirtschaftliche Arbeitsmaschine bekannt. Der Tank weist einen Korpus auf, der mit zwei den Korpus vollständig durchdringenden Ausnehmungen versehen ist, die jeweils eine zylindrische Form aufweisen. Die beiden Ausnehmungen dienen dazu, mit korrespondierend ausgeführten Lagerstellen an der landwirtschaftlichen Arbeitsmaschine zusammenzuwirken. Hierzu ist der Korpus auf zylindrisch ausgeführte Zapfen als Lagerstellen aufschiebbar, die mit den Ausnehmungen korrespondieren.

Weiterhin ist es aus der EP 3 272 566 B1 bekannt, einen Kraftstofftank für ein landwirtschaftliches Fahrzeug mit einer Ausnehmung zu versehen, wobei die Ausnehmung zur Aufnahme und Anbringung einer Spannschraubenstruktur vorgesehen ist, die zur Änderung der Steifigkeit des Kraftstofftanks selbst im Sinne einer Armierung verwendet wird.

CN217574852U offenbart eine bewegliche Öltankvorrichtung mit einer Öltankanordnung, die über ein bewegliches Element auf einer beweglichen Basis mit einer auf einer Hauptmaschine befestigten Schiene angeordnet ist. Ein Antriebsmechanismus treibt die Öltankanordnung entlang der Schiene an, wodurch eine einfache Bewegung des Öltanks für die Wartung großer Maschinen ohne größeren Demontageaufwand ermöglicht wird. JP2022097213A beschreibt einen Mähdrescher mit einem Tankmontagerahmen für einfachen Wartungszugang. US2014360148A1 und EP1291221A1 betreffen Tanksysteme, wobei US2014360148A1 einen Flüssigkeitstank für landwirtschaftliche Maschinen und EP1291221A1 einen ringförmigen LPG-Tank für Fahrzeuge offenbart.

Dem vorstehend genannten Stand der Technik haftet der Nachteil an, dass die Tanks die Montage bzw. Demontage von Bauteilen im hinter dem Tank liegenden Bereich zumindest behindern, da eine Zugänglichkeit erst nach deren Demontage gegeben ist. Zudem sind die aus dem Stand der Technik bekannten Ausnehmungen nicht als Montagedurchgangsöffnung für nicht den Tank betreffende Bauteile geeignet, da sie für die Montage oder Armierung des Tanks selbst notwendig sind.

Somit liegt der vorliegenden Erfindung die Aufgabe zugrunde, einen Feldhäcksler der eingangs genannten Art weiterzubilden, welcher sich durch eine wartungsfreundlichere Gestaltung auszeichnet.

Diese Aufgabe wird erfindungsgemäß durch einen selbstfahrenden Feldhäcksler mit den Merkmalen des Anspruches 1 gelöst. Vorteilhafte Weiterbildungen sind Gegenstand der abhängigen Ansprüche.

Gemäß dem Anspruch 1 wird ein Feldhäcksler vorgeschlagen, umfassend eine Karosserie, welche auf einem Fahrzeugrahmen angeordnet ist, an dem eine Vorderachse sowie eine Hinterachse angeordnet sind, wobei der Feldhäcksler zumindest einen Tank umfasst, welcher im Wesentlichen auf Höhe des Fahrzeugrahmens angeordnet ist. Erfindungsgemäß ist vorgesehen, dass der zumindest eine Tank innerhalb der Karosserie angeordnet ist, wobei der zumindest eine innerhalb der Karosserie angeordnete Tank zumindest eine den Tank durchdringende Ausnehmung aufweist, durch welche ein auf einer der Karosserie abgewandten Seite des Tanks befindliches Bauteil für ein Werkzeug zugänglich und/oder das Bauteil durch diese Ausnehmung montierbar und demontierbar ist.

Wesentlich ist, dass durch die Schaffung einer Zugänglichkeit zu einem hinter dem Tank liegenden Bereich innerhalb der Karosserie der Feldhäcksler wartungsfreundlicher ist, da der Tank nicht demontiert werden muss. Durch die den Tank durchdringende Ausnehmung sind Werkzeuge hindurchführbar, um verschiedene, die Montage oder Demontage eines Bauteils unterstützende und/oder ermöglichende Werkezuge einsetzen zu können. Weiter ist es denkbar, dass das Bauteil zu Austauschzwecken durch die Ausnehmung hindurch montierbar und demontierbar ist.

Bevorzugt kann der zumindest eine Tank im Heckbereich in Vorwärtsfahrtrichtung gesehen hinter der Hinterachse angeordnet sein. Die Anordnung des zumindest einen Tanks im Heckbereich hinter der Hinterachse ist vor dem Hintergrund einer optimierten Bauraumausnutzung vorteilhaft. Dabei kann der Flüssigkeitsinhalt dieses Tanks zudem, wenn auch in geringem und veränderlichem Maße, der Ballastierung dienen.

Insbesondere kann sich der zumindest eine Tank abschnittsweise nach oben und nach unten über den Fahrzeugrahmen hinaus erstrecken. Auch dies ist vor dem Hintergrund einer optimierten Bauraumausnutzung und zur Maximierung des Tankvolumens zu sehen.

Insbesondere kann sich unterhalb des Fahrzeugrahmens eine an der Hinterachse angeordnete Antriebskomponente befinden, welche sich abschnittsweise ausgehend vom Achskörper der Hinterachse in Richtung des Tanks erstreckt.

Bevorzugt können die zumindest eine Ausnehmung und das Bauteil in Längsrichtung des Feldhäckslers gesehen axial zueinander beabstandet angeordnet sein, wobei die zumindest eine Ausnehmung koaxial zur Längsachse des Bauteils angeordnet ist. Die Beabstandung kann konstruktiv bedingt sein, insbesondere, wenn an der Unterseite der Hinterachse eine Antriebskomponente verbaut ist, welche dem Allradantrieb des Feldhäckslers dient. Die Antriebskomponente erstreckt sich bevorzugt in Längsrichtung des Feldhäckslers zwischen der Hinterachse und dem im Heckbereich angeordneten Tank. Da der Bauraum oberhalb des Fahrzeugrahmens stärker beschränkt ist als unterhalb, kann vorgesehen sein, dass sich der Tank in Richtung Boden im Wesentlichen bis auf Höhe der Unterkante der Antriebskomponente erstreckt.

Insbesondere kann zum Schutz des im Heckbereich angeordneten Tanks ein Rammschutz am Fahrzeugrahmen angeordnet sein, welches mit einer mit der zumindest einen Ausnehmung hinsichtlich Position und Größe korrespondierenden Öffnung ausgeführt ist. Hierdurch wird eine weitere Vereinfachung erreicht, da somit die Demontage des Rammschutzes ebenfalls entfallen kann, um die Zugänglichkeit der Ausnehmung im Tank zu gewährleisten. Zugleich kann die mit der Größe der Ausnehmung korrespondierende Öffnung im Rammschutz einen Schutz des dahinterliegenden Tanks bilden, um Beschädigungen beim Einführen des Werkzeugs zu vermeiden.

Gemäß einer bevorzugten Weiterbildung kann die zumindest eine Ausnehmung einen konischen, sich zum Bauteil hin verjüngenden Verlauf aufweisen. Hierdurch kann sowohl das Einführen und Positionieren des Werkzeugs als auch des Bauteils verbessert werden.

Bevorzugt kann der Tank aus einem Kunststoff bestehen, wobei eine die zumindest eine Ausnehmung in Umfangsrichtung begrenzende Wandung durch ein an die Kontur angepasstes hohlzylindrisches Verstärkungselement verstärkt ist.

Gemäß einer bevorzugten Weiterbildung kann auf einem die Öffnung der Ausnehmung begrenzenden, sich radial zur Längsachse der Ausnehmung erstreckenden Wandabschnitt des Tanks ein an die Kontur der Öffnung angepasstes ringförmiges Schutzelement angeordnet sein. Das Schutzelement kann dazu dienen, ein versehentliches Durchstoßen des Tanks beim Einführen des Werkzeugs durch die Öffnung in die Ausnehmung zu vermeiden. Das Schutzelement kann aus einem Metall, insbesondere einem Leichtmetall, oder einem Kunststoff besehen.

Gemäß einer bevorzugten Weiterbildung kann das Bauteil als ein Achsbolzen ausgeführt sein, welcher in der Hinterachse lösbar angeordnet ist. Hierbei kann dem Umstand Rechnung getragen werden, dass an der Unterseite der Hinterachse eine Antriebskomponente verbaut ist, durch welche die Zugänglichkeit des Achsbolzens sowohl von der Unterseite der Hinterachse als auch in Vorwärtsfahrtrichtung gesehen auf der dem Heckbereich zugewandten Seite der Hinterachse ohne eine Demontage der Antriebskomponente nicht möglich ist. Die erfindungsgemäß Ausgestaltung des Tanks ermöglicht es, das erforderliche Werkzeug durch die Ausnehmung einzuführen, um den mit einer Drehsicherung drehfest an der Hinterachse befestigten Achsbolzen zu lösen. Im Anschluss daran kann ein weiteres Werkzeug Ausnehmung eingeführt werden, um den Achsbolzen mitsamt der Drehsicherung durch die Ausnehmung entgegen der Vorwärtsfahrtrichtung zu entfernen.

Des Weiteren wird die eingangs gestellte Aufgabe durch ein Verfahren zur Montage und Demontage eines Bauteils an einem Feldhäcksler mit den Merkmalen des Anspruches 11 gelöst.

Gemäß dem Anspruch 11 wird ein Verfahren zur Montage und Demontage eines Bauteils an einem Feldhäcksler, welcher nach einem der Ansprüche 1 bis 10 ausgeführt ist, vorgeschlagen, gekennzeichnet durch die Schritte:
Zuführen eines Werkzeugs durch zumindest eine durchdringende Ausnehmung eines innerhalb der Karosserie angeordneten Tanks, um das Bauteil zu lösen und/oder zu bewegen; und/oder Montieren und Demontieren des Bauteils durch diese zumindest eine Ausnehmung.

Dabei kann das Bauteil als ein Achsbolzen ausgeführt sein, welcher in der Hinterachse des Feldhäckslers lösbar angeordnet wird.

Der Feldhäcksler umfasst eine Karosserie, welches auf einem Fahrzeugrahmen angeordnet wird, an dem eine Vorderachse sowie eine Hinterachse angeordnet werden. An der Unterseite der Hinterachse wird eine Antriebskomponente verbaut, welche dem Allradantrieb des Feldhäckslers dient. Der zumindest eine Tank wird innerhalb der Karosserie im Wesentlichen auf Höhe des Fahrzeugrahmens im Heckbereich hinter der Hinterachse angeordnet. Durch die zumindest eine den Tank durchdringende Ausnehmung ausgeführt wird ein auf einer der Karosserie abgewandten Seite des Tanks, d.h. hinter dem Tank, befindliches Bauteil für ein Werkzeug zugänglich und/oder das Bauteil durch diese Ausnehmung montiert und demontiert, wobei das Bauteil als Achsbolzen ausgeführt ist, welcher in der Hinterachse lösbar angeordnet wird.

Die vorliegende Erfindung wird nachstehend anhand eines in den Zeichnungen dargestellten Ausführungsbeispieles näher erläutert.

Es zeigen:
- Fig. 1: eine schematische Ansicht eines selbstfahrenden Feldhäckslers;
- Fig. 2: schematisch und exemplarisch eine Teilansicht einer an einem Fahrzeugrahmen des Feldhäckslers angeordneten Hinterachse;
- Fig. 3: schematisch eine Schnittansicht entlang Linie A-A gemäß Fig. 2;
- Fig. 4: schematisch eine Schnittansicht entlang Linie B-B gemäß Fig. 3; und
- Fig. 5: schematisch und exemplarisch eine Teilansicht der Hinterachse gemäß Fig. 2 von unten.

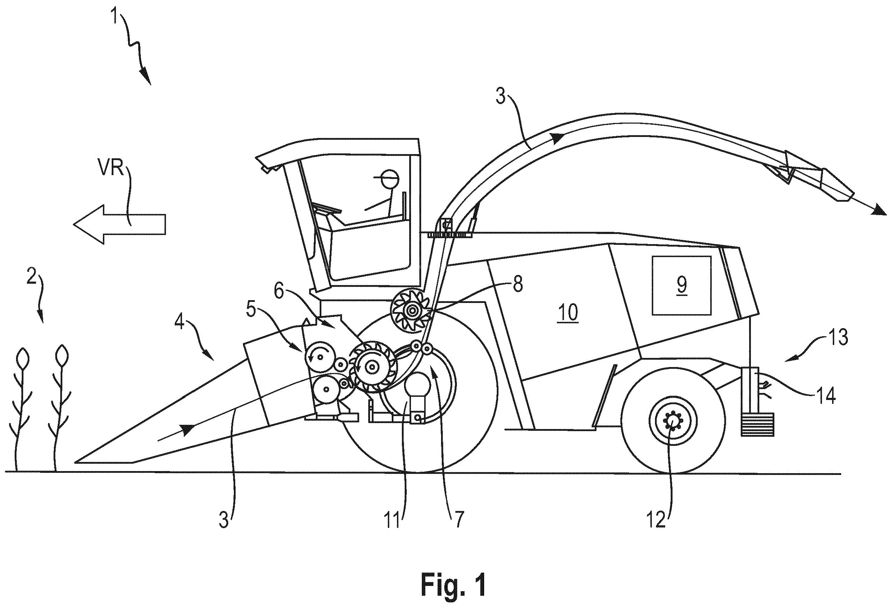

In Fig. 1 ist eine schematische Ansicht eines selbstfahrenden Feldhäckslers 1 bei der Ernte auf einem Feld 2 dargestellt. Der Feldhäcksler 1 erntet beziehungsweise nimmt mittels eines Vorsatzgerätes 4 Pflanzen vom Feld auf, um das erhaltene Erntegut 3 in Form eines Erntegutstroms (in Fig. 1 als mit Pfeilen versehene Linie angedeutet) durch Arbeitsorgane, die als Bearbeitungs- und Förderorgane des Feldhäckslers 1 ausgeführt sind, zu führen und mittels einer Überladeeinrichtung in einen - nicht dargestellten - Ladebehälter abzuwerfen. Die Bearbeitungs- und Förderorgane des Feldhäckslers 1 umfassen unter anderem ein Einzugsorgan 5, welches aus mehreren, in einem Einzugsgehäuse hintereinander angeordneten Walzenpaaren besteht. Weiterhin eine Häckseleinrichtung 6, die mittels einer rotierenden, mit Messern ausgestatteten Häckseltrommel das Erntegut in Zusammenwirkung mit einer Gegenschneide zerkleinert, eine der Häckseleinrichtung 6 in einem Förderschacht in Gutstromrichtung nachgelagerte Konditioniereinrichtung 7 sowie einen der Konditioniereinrichtung 7 im Förderschacht in Gutstromrichtung nachgelagerten Auswurfbeschleuniger 8, welcher das Erntegut 3 mittels rotierender Wurfpaddel für den sicheren Auswurf durch die Überladeeinrichtung beschleunigt. Das Vorsatzgerät 4, das Einzugsorgan 5, die Häckseleinrichtung 6, die Konditioniereinrichtung 7 sowie der Auswurfbeschleuniger 8 werden nachfolgend als Arbeitsorgane bezeichnet. Im Heck des Feldhäckslers 1 ist ein als Verbrennungsmotor ausgeführter Antriebsmotor 9 angeordnet, der dem Antrieb der vorgenannten Arbeitsorgane 4, 5, 6, 7, 8 des Feldhäckslers 1 dient.

Der Feldhäcksler 1 umfasst eine Karosserie 10, welche auf einem Fahrzeugrahmen 15 angeordnet ist, an dem eine Vorderachse 11 sowie eine Hinterachse 12 angeordnet sind. Im Heckbereich 13 ist ein Rammschutz 14 angeordnet.

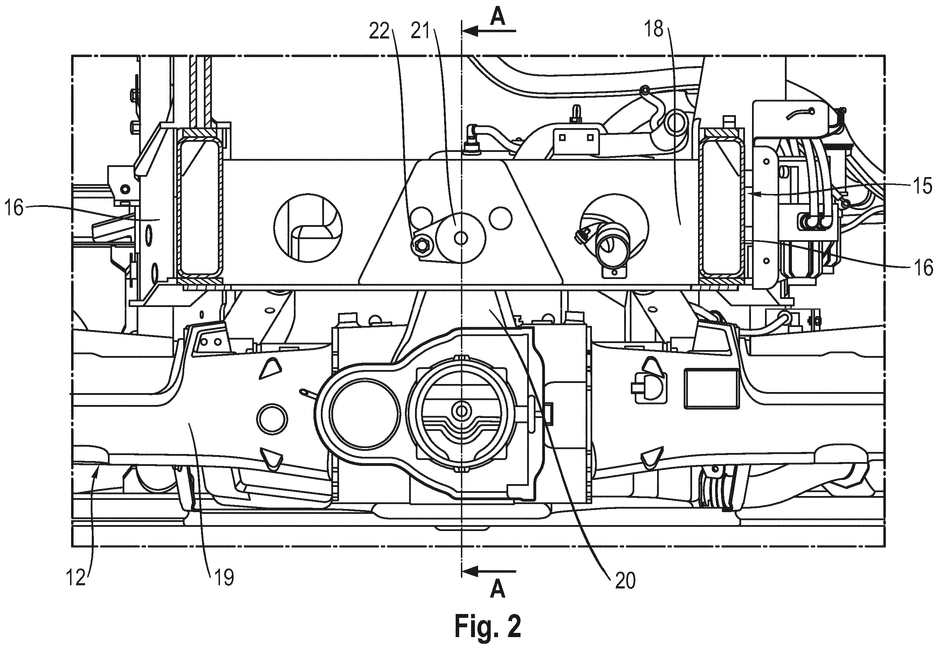

In Fig. 2 ist schematisch und exemplarisch eine Teilansicht der am Fahrzeugrahmen 15 des Feldhäckslers 1 angeordneten Hinterachse 12 dargestellt. Der Fahrzeugrahmen 15 umfasst zwei zueinander parallele, in Längsrichtung des Feldhäckslers 1 verlaufende Längsträger 16. Zwischen den Längsträgern 16 sind eine vordere Querstrebe 17 und eine hintere Querstrebe 18 angeordnet. Die Längsträger 16 sind in Längsrichtung des Feldhäckslers 1 gesehen zueinander beabstandet angeordnet. Die Querstreben 17, 18 erstrecken sich quer zur Vorwärtsfahrtrichtung VR respektive Längsrichtung des Feldhäckslers 1 und sind ihrerseits an ihren beiden Enden mit je einem der Längsträger 16 verbunden. Die Hinterachse 12 weist einen einteilig oder mehrteilig ausgeführten Achskörper 19 auf. An der Oberseite des Achskörpers 19 ist mittig ein sich nach oben erstreckendes, domförmiges Halteelement 20 angeordnet. Das Halteelement 20 erstreckt sich abschnittsweise zwischen der vorderen Querstrebe 17 und der hinteren Querstrebe 18. Zur Verbindung des Achskörpers 19 mit dem Fahrzeugrahmen 15 erstreckt sich ein parallel zur Längsachse des Feldhäckslers 1 orientierter Achsbolzen 21 durch die Querstreben 17, 18 und das Halteelement 20. Der Achsbolzen 21 ist durch ein Sicherungsmittel 22, beispielsweise eine Schraubverbindung gesichert.

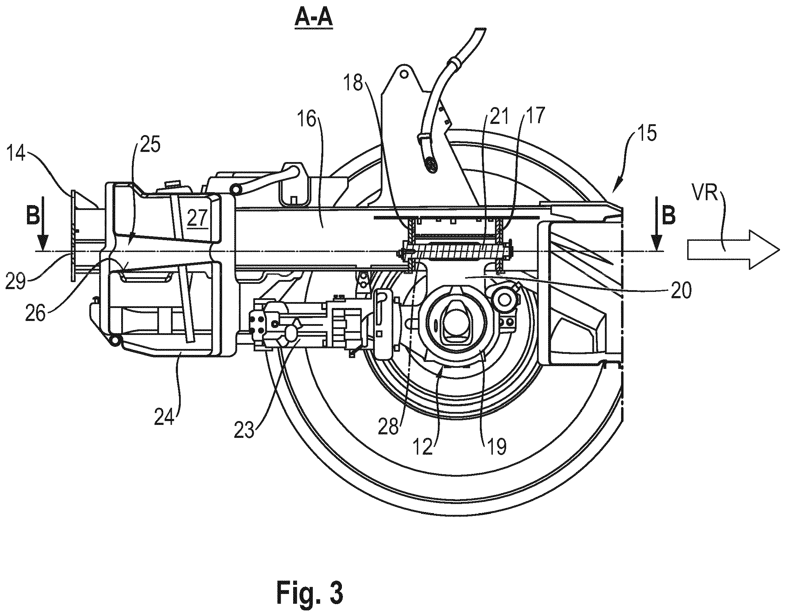

Die Darstellung in Fig. 3 zeigt schematisch eine Schnittansicht entlang der Linie A-A gemäß Fig. 2. An der Unterseite der Hinterachse 12 ist eine Antriebskomponente 23 verbaut, welche dem Allradantrieb des Feldhäckslers 1 dient. Der Feldhäcksler 1 umfasst zumindest einen Tank 24 für Betriebsstoffe des Feldhäckslers 1, insbesondere Kraftstoff, welcher im Wesentlichen auf Höhe des Fahrzeugrahmens 15 im Heckbereich 13 angeordnet ist. Der im Heckbereich angeordnete Tank 24 erstreckt sich abschnittsweise nach oben und nach unten über den Fahrzeugrahmen 15 hinaus. Insbesondere erstreckt sich der Tank 24 in Richtung des befahrenen Bodens im Wesentlichen bis auf Höhe der Unterkante der Antriebskomponente 23, die zwischen dem Achskörper 19 und dem Tank 24 angeordnet ist.

Der Tank 24 weist zumindest eine diesen durchdringende Ausnehmung 25 auf. Die Ausnehmung 25 erstreckt sich in Längsrichtung des Feldhäckslers 1. Die Ausnehmung 25 ist durch eine umlaufende Wandung 26 in Umfangsrichtung begrenzt. Die Wandung 26 separiert die Ausnehmung 25 vom umgebenden Hohlraum 27 des Tanks 24, welcher der Aufnahme des Betriebsstoffes dient. Die zumindest eine Ausnehmung 25 weist, in Vorwärtsfahrtrichtung VR gesehen, einen konischen, sich zum Achsbolzen 21 hin verjüngenden Verlauf auf. Die Ausnehmung 25 weist eine hohlzylindrische Kontur auf.

Die zumindest eine Ausnehmung 25 und der Achsbolzen 21 sind in Längsrichtung des Feldhäckslers 1 gesehen axial zueinander beabstandet angeordnet. Der axiale Abstand ergibt sich wegen der sich abschnittsweise nach unten über den Fahrzeugrahmen 15 hinaus erstreckenden Ausgestaltung des Tanks 24 durch die an der Hinterachse 12 angeordnete Antriebskomponente 23. Die zumindest eine Ausnehmung 25 ist koaxial zur Längsachse 28 des Achsbolzens 21 angeordnet.

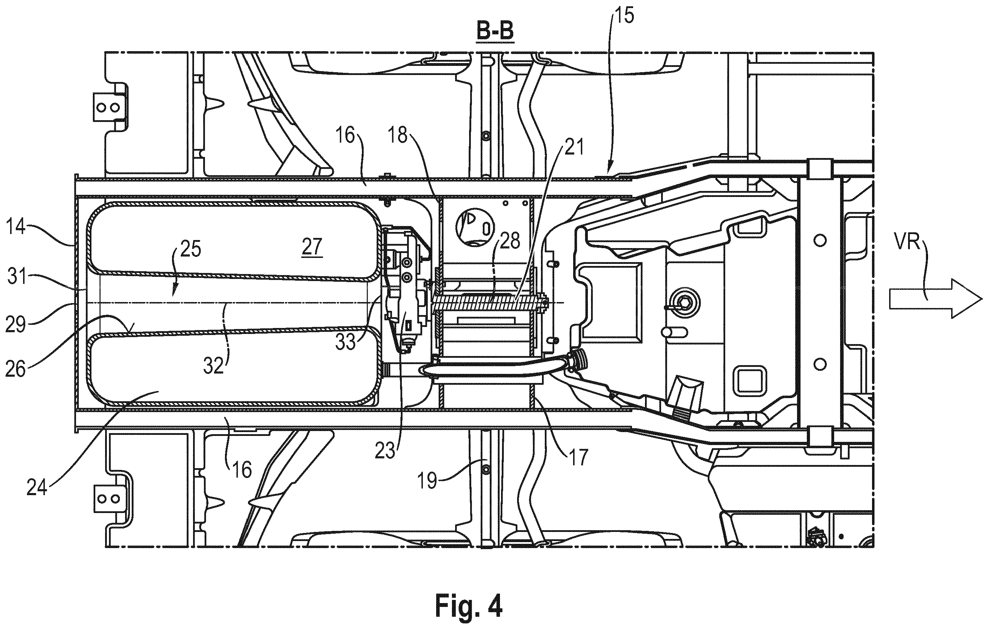

Die Darstellung in Fig. 4 zeigt schematisch eine Schnittansicht entlang der Linie B-B gemäß Fig. 3. Der insbesondere zum Schutz des Tanks 24 im Heckbereich 13 angeordnete Rammschutz 14 ist mit einer Öffnung 29 ausgeführt. Die Öffnung 29 korrespondiert mit der zumindest einen Ausnehmung 25 hinsichtlich Position und Größe. Hierdurch wird eine weitere Vereinfachung erreicht, da somit die Demontage des Rammschutzes 14 entfallen kann, um die Zugänglichkeit der Ausnehmung 25 im Tank 24 zu gewährleisten. Zugleich kann die mit der Größe der Ausnehmung 25 korrespondierende Öffnung 29 im Rammschutz 14 einen Schutz des dahinterliegenden Tanks 24 bilden, um Beschädigungen beim Einführen eines Werkzeugs, beispielsweise einer Zug- oder Druckstange, zu vermeiden. Abweichend von der Darstellung in Fig. 3 weist der schematisch dargestellte Tank 24 zur Volumenvergrößerung eine größere Ausdehnung in Richtung der Hinterachse 12 auf. Entsprechend verringert sich der axiale Abstand zwischen dem der Hinterachse 12 zugewandten Ende der Ausnehmung 25 und dem Abschnitt des Achsbolzens 21, an welchem das Werkzeug angreift. Während bei der in Fig. 3 dargestellten Ausführung des Tanks 24 der Achsbolzen 21 nach dem Lösen des Sicherungsmittels 22 nach unten in Richtung der Antriebskomponente 23 entnehmbar ist, muss der Achsbolzen 21 gemäß der in Fig. 4 beispielhaft dargestellten Ausführung des Tanks 24 in Richtung des Rammschutzes 14 durch die Ausnehmung 25 im Tank 24 hindurch gezogen werden, um diesen demontieren zu können. Für die Montage des Achsbolzens 21 gilt dies entsprechend.

Gemäß einem Aspekt der Erfindung kann der Tank 24 aus einem Kunststoff bestehen, wobei die die zumindest eine Ausnehmung 25 im Tankinneren in Umfangsrichtung begrenzende Wandung 26 durch ein an die Kontur der Ausnehmung 25 angepasstes hohlzylindrisches Verstärkungselement verstärkt ist. Das Verstärkungselement kann einen zusätzlichen Schutz vor Beschädigungen bei der Hindurchführung des Werkzeugs zur und/oder bei der Montage und Demontage des Achsbolzens 21 bieten.

Gemäß einem weiteren Aspekt der Erfindung kann zusätzlich an einem eine Eintrittsöffnung 31 der Ausnehmung 25 begrenzenden, sich radial zur Längsachse 32 der Ausnehmung 25 erstreckenden stirnseitigen Wandabschnitt des Tanks 24 ein an die Kontur der Eintrittsöffnung 31 angepasstes ringförmiges oder flanschförmiges Schutzelement angeordnet sein.

Eine Austrittsöffnung 33 der Ausnehmung 25 ist der Hinterachse zugewandt. Die Größe der Austrittsöffnung 33 der Ausnehmung 25 ist derart gewählt, dass das Bauteil 30 durch diese hindurchführbar ist.

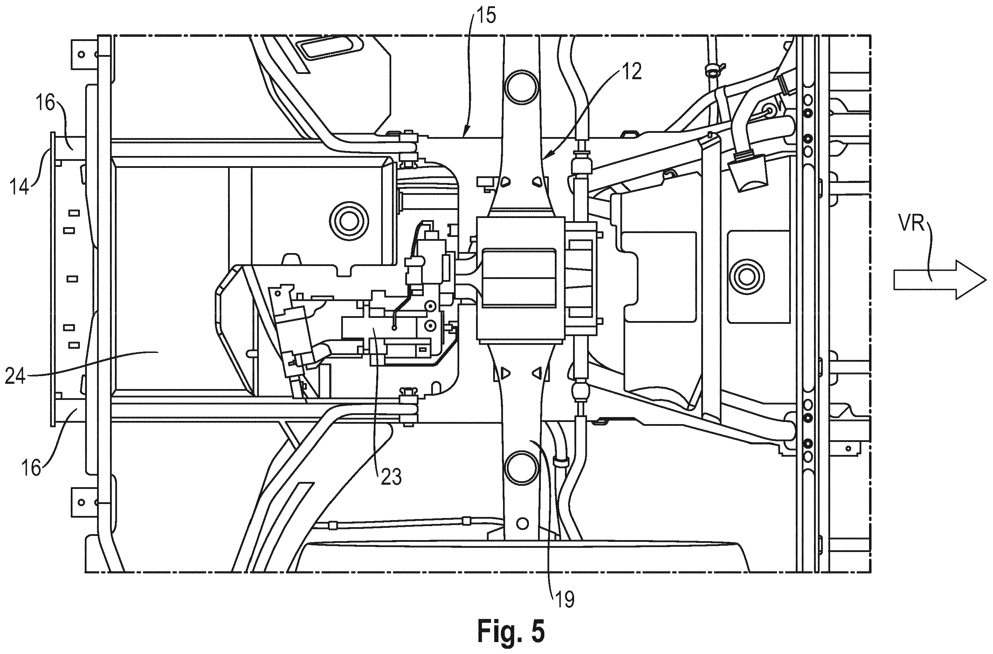

Die Darstellung in Fig. 5 zeigt schematisch und exemplarisch eine Teilansicht der Hinterachse 12 gemäß Fig. 2 von unten. In Fig. 5 wird die Problematik verdeutlicht, welche bei der Montage und Demontage des Achsbolzens 21 auftritt. Die Zugänglichkeit des Achsbolzens 21 wird durch den montierten Tank 24 sowie die Antriebskomponente 23 an der Hinterachse 12 signifikant eingeschränkt. Durch die erfindungsgemäße Ausgestaltung des Tanks 24 wird ein auf einer der Karosserie 10 abgewandten Seite des Tanks 24 befindliches Bauteil 30, hier und vorzugsweise der Achsbolzen 21, für ein Werkzeug zugänglich und/oder das Bauteil 30 ist durch diese Ausnehmung 25 montierbar und demontierbar.

Das Verfahren zur Montage und Demontage des Bauteils 30, hier und vorzugsweise des Achsbolzens 21, an dem Feldhäcksler 1 lässt sich durch die Schritte des Zuführens eines Werkzeugs durch die zumindest eine durchdringende Ausnehmung 25 des innerhalb der Karosserie 10 auf dem Fahrzeugrahmen 15 angeordneten Tanks 24, um das Bauteil 30 zu lösen und/oder zu bewegen; und/oder durch das Montieren und Demontieren des Bauteils 30 durch diese zumindest eine Ausnehmung 25 realisieren.

Wesentlich ist, dass die Montage und Demontage des Bauteils 30, insbesondere des Achsbolzens 21, an der Hinterachse 12 durchführbar ist, ohne den Tank 24 und/oder die Antriebskomponente 23 an der Hinterachse 12 entfernen zu müssen.

**Bezugszeichenliste**

| | | | |
|---|---|---|---|
| 1 | Feldhäcksler | VR | Vorwärtsfahrtrichtung |
| 2 | Feld | | |
| 3 | Erntegut | | |
| 4 | Vorsatzgerät | | |
| 5 | Einzugsorgan | | |
| 6 | Häckseleinrichtung | | |
| 7 | Konditioniereinrichtung | | |
| 8 | Auswurfbeschleuniger | | |
| 9 | Antriebsmotor | | |
| 10 | Karosserie | | |
| 11 | Vorderachse | | |
| 12 | Hinterachse | | |
| 13 | Heckbereich | | |
| 14 | Rammschutz | | |
| 15 | Fahrzeugrahmen | | |
| 16 | Längsträger | | |
| 17 | Vordere Querstrebe | | |
| 18 | Hintere Querstrebe | | |
| 19 | Achskörper | | |
| 20 | Halteelement | | |
| 21 | Achsbolzen | | |
| 22 | Sicherungsmittel | | |
| 23 | Antriebskomponente | | |
| 24 | Tank | | |
| 25 | Ausnehmung | | |
| 26 | Wandung | | |
| 27 | Hohlraum | | |
| 28 | Längsachse | | |
| 29 | Öffnung | | |
| 30 | Bauteil | | |
| 31 | Eintrittsöffnung | | |
| 32 | Längsachse | | |
| 33 | Austrittsöffnung | | |

## Patentansprüche

1. Feldhäcksler (1), umfassend eine Karosserie (10), welche auf einem Fahrzeugrahmen (15) angeordnet ist, an dem eine Vorderachse (11) sowie eine Hinterachse (12) angeordnet sind, wobei der Feldhäcksler (1) zumindest einen Tank (24) umfasst, welcher im Wesentlichen auf Höhe des Fahrzeugrahmens (15) angeordnet ist, **dadurch gekennzeichnet, dass** der zumindest eine Tank (24) innerhalb der Karosserie (10) angeordnet ist, wobei der zumindest eine innerhalb der Karosserie (10) angeordnete Tank (24) zumindest eine den Tank (24) durchdringende Ausnehmung (25) aufweist, durch welche ein auf einer der Karosserie (10) abgewandten Seite des Tanks (24) befindliches Bauteil (30) für ein Werkzeug zugänglich und/oder das Bauteil (30) durch diese Ausnehmung (25) montierbar und demontierbar ist.

2. Feldhäcksler (1) nach Anspruch 1, **dadurch gekennzeichnet, dass** der zumindest eine Tank (24) im Heckbereich (13) in Vorwärtsfahrtrichtung (VR) gesehen hinter der Hinterachse (12) angeordnet ist.

3. Feldhäcksler (1) nach Anspruch 1 oder 2, **dadurch gekennzeichnet, dass** sich der zumindest eine Tank (24) abschnittsweise nach oben und nach unten über den Fahrzeugrahmen (15) hinaus erstreckt.

4. Feldhäcksler (1) nach einem der Ansprüche 1 bis 3, **dadurch gekennzeichnet, dass** sich unterhalb des Fahrzeugrahmens (15) eine an der Hinterachse (12) angeordnete Antriebskomponente (23) befindet, welche sich abschnittsweise ausgehend vom Achskörper (19) der Hinterachse (12) in Richtung des Tanks (24) erstreckt.

5. Feldhäcksler (1) nach einem der vorangehenden Ansprüche, **dadurch gekennzeichnet, dass** die zumindest eine Ausnehmung (25) und das Bauteil (30) in Längsrichtung des Feldhäckslers (1) gesehen axial zueinander beabstandet angeordnet sind, wobei die zumindest eine Ausnehmung (25) koaxial zur Längsachse (28) des Bauteils (30) angeordnet ist.

6. Feldhäcksler (1) nach einem der vorangehenden Ansprüche, **dadurch gekennzeichnet, dass** zum Schutz des im Heckbereich (13) angeordneten Tanks (24) ein Rammschutz (14) am Fahrzeugrahmen (15) angeordnet ist, welches mit einer mit der zumindest einen Ausnehmung (25) hinsichtlich Position und Größe korrespondierenden Öffnung (29) ausgeführt ist.

7. Feldhäcksler (1) nach einem der vorangehenden Ansprüche, **dadurch gekennzeichnet, dass** die zumindest eine Ausnehmung (25) einen konischen, sich zum Bauteil (30) hin verjüngenden Verlauf aufweist.

8. Feldhäcksler (1) nach einem der vorangehenden Ansprüche, **dadurch gekennzeichnet, dass** der Tank (24) aus einem Kunststoff besteht, wobei eine die zumindest eine Ausnehmung (25) im Tankinneren in Umfangsrichtung begrenzende Wandung (26) durch ein an die Kontur angepasstes hohlzylindrisches Verstärkungselement verstärkt ist.

9. Feldhäcksler (1) nach einem der vorangehenden Ansprüche, **dadurch gekennzeichnet, dass** auf einem eine Eintrittsöffnung (31) der Ausnehmung (25) begrenzenden, sich radial zur Längsachse (32) der Ausnehmung (25) erstreckenden Wandabschnitt des Tanks (24) ein an die Kontur der Eintrittsöffnung (31) angepasstes ringförmiges Schutzelement angeordnet ist.

10. Feldhäcksler (1) nach einem der vorangehenden Ansprüche, **dadurch gekennzeichnet, dass** das Bauteil (30) als ein Achsbolzen (21) ausgeführt ist, welcher in der Hinterachse (12) lösbar angeordnet ist.

11. Verfahren zur Montage und Demontage eines Bauteils an einem Feldhäcksler (1), welcher nach einem der Ansprüche 1 bis 10 ausgeführt ist, **gekennzeichnet durch** die Schritte:
Zuführen eines Werkzeugs durch zumindest eine durchdringende Ausnehmung (25) eines innerhalb der Karosserie (10) angeordneten Tanks (24), um das Bauteil (30) zu lösen und/oder zu bewegen; und/oder
Montieren und Demontieren des Bauteils (30) durch diese zumindest eine Ausnehmung (25).

12. Verfahren nach Anspruch 11, **dadurch gekennzeichnet, dass** das Bauteil (30) als ein Achsbolzen (21) ausgeführt ist, welcher in der Hinterachse (12) des Feldhäckslers (1) lösbar angeordnet wird.

## Claims

1. Field chopper (1), comprising a body (10) which is arranged on a vehicle frame (15), on which a front axle (11) and a rear axle (12) are arranged, wherein the field chopper (1) comprises at least one tank (24) which is arranged substantially at the height of the vehicle frame (15), **characterized in that** the at least one tank (24) is arranged within the body (10), wherein the at least one tank (24) arranged within the body (10) has at least one cut-out (25) which penetrates the tank (24), and through which a component (30) located on a side of the tank (24) facing away from the body (10) can be accessed for a tool and/or the component (30) can be mounted and dismantled through this cut-out (25).

2. Field chopper (1) according to Claim 1, **characterized in that** the at least one tank (24) is arranged in the rear region (13) behind the rear axle (12) as viewed in the forward direction of travel (VR).

3. Field chopper (1) according to Claim 1 or 2, **characterized in that** the at least one tank (24) extends in sections upwards and downwards beyond the vehicle frame (15).

4. Field chopper (1) according to one of Claims 1 to 3, **characterized in that** a drive component (23) arranged on the rear axle (12) is located below the vehicle frame (15), which drive component extends in sections, starting from the axle beam (19) of the rear axle (12), in the direction of the tank (24).

5. Field chopper (1) according to one of the preceding claims, **characterized in that** the at least one cut-out (25) and the component (30) are arranged axially spaced from each other as viewed in the longitudinal direction of the field chopper (1), wherein the at least one cut-out (25) is arranged coaxially with respect to the longitudinal axis (28) of the component (30).

6. Field chopper (1) according to one of the preceding claims, **characterized in that**, for the protection of the tank (24) arranged in the rear region (13), a ram protection means (14) is arranged on the vehicle frame (15), which ram protection means is designed with an opening (29) corresponding to the at least one cut-out (25) in terms of position and size.

7. Field chopper (1) according to one of the preceding claims, **characterized in that** the at least one cut-out (25) has a conical profile tapered toward the component (30).

8. Field chopper (1) according to one of the preceding claims, **characterized in that** the tank (24) consists of a plastic, wherein a wall (26) which delimits the at least one cut-out (25) in the tank interior in the circumferential direction is reinforced by a hollow-cylindrical reinforcing element adapted to the contour.

9. Field chopper (1) according to one of the preceding claims, **characterized in that** an annular protective element adapted to the contour of the inlet opening (31) is arranged on a wall portion of the tank (24) which delimits an inlet opening (31) of the cut-out (25) and extends radially with respect to the longitudinal axis (32) of the cut-out (25).

10. Field chopper (1) according to one of the preceding claims, **characterized in that** the component (30) is designed as an axle bolt (21) which is detachably arranged in the rear axle (12).

11. Method for assembling and disassembling a component on a field chopper (1) which is designed according to one of Claims 1 to 10, **characterized by** the steps:
feeding a tool through at least one penetrating cut-out (25) of a tank (24) arranged within the body (10), in order to detach and/or move the component (30); and/or
mounting and dismantling the component (30) through this at least one cut-out (25).

12. Method according to Claim 11, **characterized in that** the component (30) is designed as an axle bolt (21) which is detachably arranged in the rear axle (12) of the field chopper (1).

## Revendications

1. Récolteuse-hacheuse-chargeuse (1), comprenant une carrosserie (10) qui est disposée sur un châssis de véhicule (15) sur lequel sont installés un essieu avant (11) ainsi qu'un essieu arrière (12), la récolteuse-hacheuse-chargeuse (1) comportant au moins un réservoir (24) qui est placé sensiblement à hauteur du châssis de véhicule (15), **caractérisée en ce que** le réservoir (24), au nombre d'au moins un, est disposé à l'intérieur de la carrosserie (10), ledit réservoir (24), au nombre d'au moins un, disposé à l'intérieur de la carrosserie (10), présentant au moins un évidement (25) traversant le réservoir (24), à travers lequel un élément de construction (30), situé sur le côté du réservoir (24) éloigné de la carrosserie (10), est accessible pour un outil, et/ou à travers lequel l'élément de construction (30) peut être monté et démonté à travers ledit évidement (25).

2. Récolteuse-hacheuse-chargeuse (1) selon la revendication 1, **caractérisée en ce que** le réservoir (24), au nombre d'au moins un, est disposé dans la partie arrière (13), derrière l'essieu arrière (12), vu dans le sens de marche avant (VR).

3. Récolteuse-hacheuse-chargeuse (1) selon la revendication 1 ou 2, **caractérisée en ce que** le réservoir (24), au nombre d'au moins un, s'étend avec certaines parties vers le haut et vers le bas, au-delà du châssis de véhicule (15).

4. Récolteuse-hacheuse-chargeuse (1) selon une des revendications 1 à 3, **caractérisée en ce qu'**il est prévu, sous le châssis de véhicule (15), un composant d'entraînement (23) qui est placé sur l'essieu arrière (12) et s'étend par portions en direction du réservoir (24), en partant du corps d'essieu (19) de l'essieu arrière (12).

5. Récolteuse-hacheuse-chargeuse (1) selon une des revendications précédentes, **caractérisée en ce que** l'évidement (25), au nombre d'au moins un, et l'élément de construction (30) sont disposés axialement à distance l'un de l'autre, vu dans le sens longitudinal de la récolteuse-hacheuse-chargeuse (1), l'évidement (25), au nombre d'au moins un, étant installé de façon coaxiale avec l'axe longitudinal (28) de l'élément de construction (30).

6. Récolteuse-hacheuse-chargeuse (1) selon une des revendications précédentes, **caractérisée en ce que** pour la protection du réservoir (24) disposé dans la partie arrière (13), un élément de protection anticollision (14) est installé sur le châssis de véhicule (15), lequel élément est réalisé avec une ouverture (29) dont la position et les dimensions correspondent à celles de l'évidement (25), au nombre d'au moins un.

7. Récolteuse-hacheuse-chargeuse (1) selon une des revendications précédentes, **caractérisée en ce que** l'évidement (25), au nombre d'au moins un, présente une forme conique, diminuant en section en direction de l'élément de construction (30).

8. Récolteuse-hacheuse-chargeuse (1) selon une des revendications précédentes, **caractérisée en ce que** le réservoir (24) est réalisé à partir d'une matière plastique, une paroi (26) qui délimite l'évidement (25), au nombre d'au moins un, dans la direction périphérique, à l'intérieur du réservoir, étant renforcée par un élément de renfort cylindrique creux, adapté au contour.

9. Récolteuse-hacheuse-chargeuse (1) selon une des revendications précédentes, **caractérisée en ce qu'**il est prévu, sur une partie de paroi du réservoir (24) délimitant une ouverture d'entrée (31) de l'évidement (25) et s'étendant radialement par rapport à l'axe longitudinal (32) de l'évidement (25), un élément de protection annulaire, adapté au contour de l'ouverture d'entrée (31).

10. Récolteuse-hacheuse-chargeuse (1) selon une des revendications précédentes, **caractérisée en ce que** l'élément de construction (30) est réalisé sous forme de goujon d'essieu (21) qui est disposé de façon amovible dans l'essieu arrière (12).

11. Procédé de montage et démontage d'un élément de construction sur une récolteuse-hacheuse-chargeuse (1) qui est réalisée selon une des revendications 1 à 10, **caractérisé en ce qu'**il comprend les étapes suivantes :
amenée d'un outil à travers au moins un évidement (25) traversant d'un réservoir (24) disposé à l'intérieur de la carrosserie (10), aux fins de desserrer et/ou déplacer l'élément de construction (30) ; et/ou
montage et démontage de l'élément de construction (30) à travers cet évidement, au nombre d'au moins un.

12. Procédé selon la revendication 11, **caractérisé en ce que** l'élément de construction (30) est réalisé sous forme de goujon d'essieu (21) qui est disposé de façon amovible dans l'essieu arrière (12) de la récolteuse-hacheuse-chargeuse (1).
